(19) Europäisches Patentamt
European Patent Office
Office européen des brevets

(11) **EP 1 066 509 B1**

(12) **EUROPÄISCHE PATENTSCHRIFT**

(45) Veröffentlichungstag und Bekanntmachung des Hinweises auf die Patenterteilung:
**08.10.2003 Patentblatt 2003/41**

(21) Anmeldenummer: **99917947.6**

(22) Anmeldetag: **25.03.1999**

(51) Int Cl.⁷: **G01N 21/89**

(86) Internationale Anmeldenummer:
**PCT/EP99/02244**

(87) Internationale Veröffentlichungsnummer:
**WO 99/049304 (30.09.1999 Gazette 1999/39)**

(54) **VERFAHREN ZUR DETEKTION VON FEHLERN IN FLACHGLAS, INSBESONDERE VON DRIPS, FÄDEN UND LINIEN**

METHOD FOR DETECTING FAULTS IN FLAT GLASS, ESPECIALLY DRIPS, THREADS AND LINES

PROCEDE PERMETTANT DE DETERMINER LA QUALITE OPTIQUE ET DE DETECTER LES DEFAUTS DU VERRE FEUILLETE ET D'AUTRES MATERIAUX OPTIQUES TRANSPARENTS, NOTAMMENT LES GOUTTES, LES FILS ET LES LIGNES

(84) Benannte Vertragsstaaten:
**BE DE ES FI FR GB IT NL PT SE**

(30) Priorität: **25.03.1998 DE 19813073**

(43) Veröffentlichungstag der Anmeldung:
**10.01.2001 Patentblatt 2001/02**

(73) Patentinhaber: **Lasor AG**
**33813 Oerlinghausen (DE)**

(72) Erfinder:
• **HAUBOLD, Wolfgang**
**D-33619 Bielefeld (DE)**
• **DROSTE, Josef**
**D-49219 Glandorf (DE)**
• **PANEFF, Edmund**
**D-33729 Bielefeld (DE)**

(74) Vertreter:
**von Kirschbaum, Alexander, Dipl.-Ing. et al**
**Patentanwälte**
**von Kreisler Selting Werner**
**Deichmannhaus am Dom**
**Postfach 10 22 41**
**50462 Köln (DE)**

(56) Entgegenhaltungen:
EP-A- 0 491 555     EP-A- 0 576 011
FR-A- 1 308 013     GB-A- 1 376 742
US-A- 4 570 074

**Beschreibung**

Die Erfindung betrifft ein Verfahren zur Bestimmung der optischen Qualität und zur Detektion von Fehlern von Flachglas nach dem Oberbegriff des Anspruchs 1.

Es sind Verfahren zur Bestimmung der optischen Qualität von Flachglas, insbesondere von Floatglas, bekannt, bei denen eine Videokamera durch das Glas bzw. die Bahn eine Beleuchtungsvorrichtung betrachtet. Die Videokamera empfängt dabei Signale in Abhängigkeit von der Qualität des Glases. Diese Signale werden anschließend ausgewertet.

Bei der Produktion von Glas und transparenten Materialien treten Linien in Längsrichtung, Fäden und Fehler mit geringer optischer Verformung auf, deren optische Ablenkung lediglich quer zur Bahn erfolgt. Diese Fehler sind mit der herkömmlichen Dunkelfeldtechnik und anderen Verfahren, die lediglich die Ablenkung in Längsrichtung erfassen, nicht zu detektieren.

Im Folgenden wird ein neues Verfahren und Vorrichtung zur Detektion von Glasfehlern vorgestellt. Es detektiert die Ablenkung eines Glasfehlers quer zur Glasbahn und ist vor allem für die Detektion von Linien, Fäden und Fehlern mit geringer optischer Verformung (Drips) geeignet.

Das erfindungsgemäße Verfahren wird im Anspruch 1 beschrieben.

In vorteilhafter Ausgestaltung der Erfindung wird ein zweifarbiges Muster mit sich in der Farbe abwechselnden Teilabschnitten verwendet, und die Videokamera enthält einen Farbchip, wobei die Videosignale jeweils einer Farbe zugeordnet sind.

Zweckmäßigerweise ist die Breite der Teilabschnitte geringfügig größer oder kleiner als die Seitenlänge des Betrachtungsflecks. Es ändert sich jeweils nur die Auswertung.

In einer alternativen vorteilhaften Ausgestaltung der Erfindung besteht das Muster aus Teilabschnitten abwechselnder Hell- und Dunkelzonen. Vorteilhafterweise werden die Teilabschnitte in vorgegebenen Phasen zyklisch beleuchtet und abgedunkelt.

Zweckmäßigerweise wird eine zweite identische Beleuchtungsvorrichtung verwendet, deren Muster um die Hälfte der Breite eines Teilabschnittes gegenüber dem Muster der ersten Beleuchtungsvorrichtung verschoben ist. Hierdurch sind Totzonen vermieden.

Als Maß für die Ablenkung des Fehlers im Glas wird vorteilhafterweise die Differenz der beiden Videosignale $U_1$, $U_2$ herangezogen.

In besonderer Ausgestaltung wird als Maß für die Ablenkung des Fehlers die Beziehung

$$Upos = \frac{U_1 - U_2}{U_1 + U_2}$$

verwendet.

Vorteilhafterweise wird zur Vermessung des Fehlerkerns im Glas eine Abweichung vom Maximalwert der Addition von $U_1$ und $U_2$, d. h. $U_h = U_1 + U_2$, verwendet.

Weitere Merkmale der Erfindung ergeben sich aus den Figuren, die nachfolgend beschrieben sind. Es zeigt:

Fig. 1    schematisch das erfindungsgemäße Verfahren mit einem zweifarbigen Muster,

Fig. 2    die beiden Videosignale $U_1$, $U_2$ gemäß der Fig. 1 und

Fig. 3    schematisch das erfindungsgemäße Verfahren mit einer Beleuchtungsvorrichtung aus Teilabschnitten abwechselnder Hell- und Dunkelzonen.

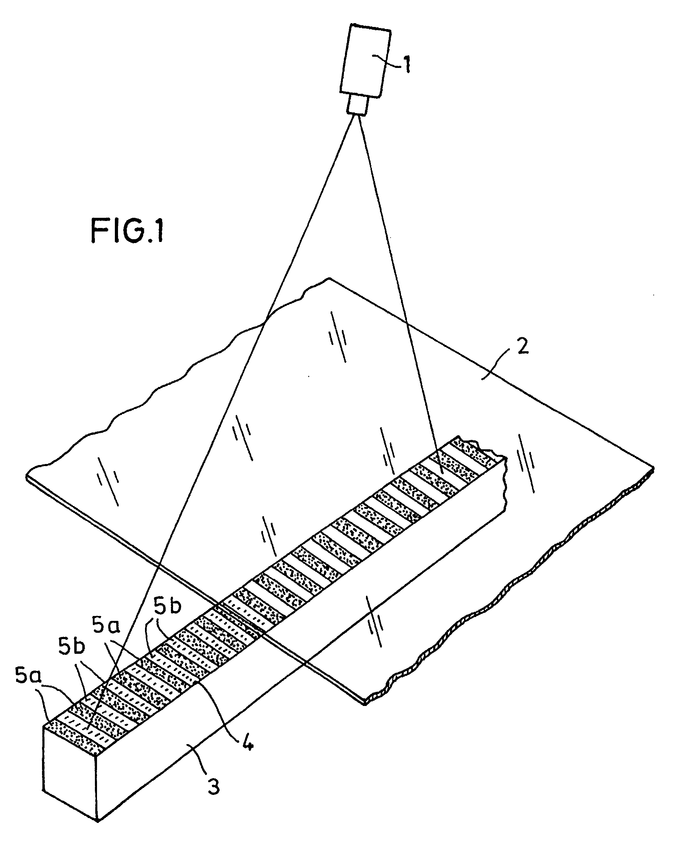

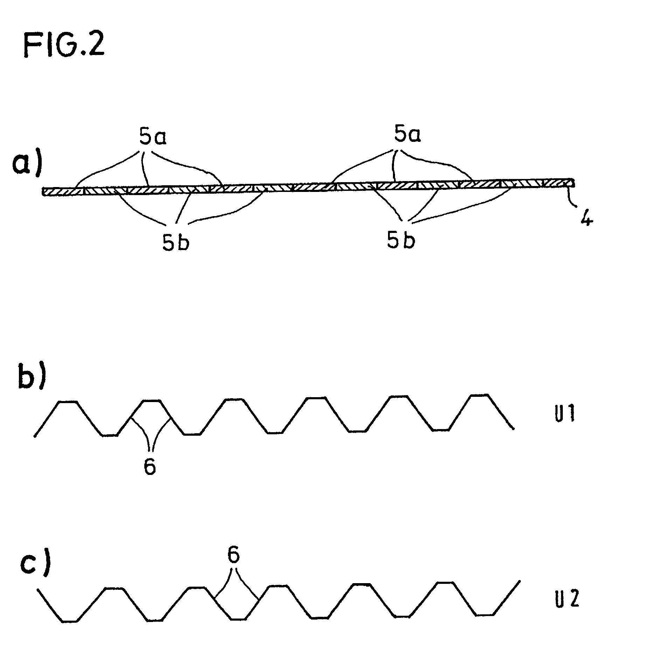

Fig. 1 zeigt schematisch das erfindungsgemäße Verfahren. Die Farb-Zeilenkamera 1 betrachtet durch das Glas 2 oder in Reflexion die Beleuchtung 3. Der Fokus der Kamera 1 befindet sich auf der Ebene Glas 2. Bedingt durch die Schärfentiefe hat das Betrachtungsquadrat je nach Blendeneinstellung auf der Beleuchtung eine Seitenlänge von wenigen mm bis zu mehreren cm. Auf der Beleuchtung ist ein Muster 4 aufgebracht, das im Wechsel von zwei unterschiedlichen Farben besteht (z. B. rot, grün). Die Farbbalken bzw. die Teilabschnitte 5a, 5b haben eine Breite, die geringfügig größer oder kleiner ist als die Seitenlänge des Betrachtungsquadrats. Die von der Kamera 1 erzeugten Videosignale $U_1$, $U_2$ sind dementsprechend eine Folge von um 180° versetzten Hell- und Dunkelsprüngen mit dem jeweiligen Verlauf eines gleichschenkligen Trapezes (Fig. 2).

Die beiden Schenkel 6 des Trapezes sind die Zonen, in denen die Detektion von Auslenkungen durch optische Verformungen vorgenommen wird. Sie entstehen an dem Ort, an dem das Sichtfeld der Kamera 1 über der Grenze zweier Zonen 5a, 5b liegt. In einem solchen Sichtfeld werden zwei Videosignale mit entgegengesetztem Spannungsverlauf erzeugt. Mit

$$Upos = \frac{U_1 - U_2}{U_1 + U_2}$$

erhält man im Bereich der Schenkel 6 des Trapezes ein Videosignal $U_1$, $U_2$ mit einem von der Position des Betrachtungsquadrats abhängigen Spannungsverlauf. Durch optische Verformungen, die das Betrachtungsquadrat quer zur Laufrichtung der Glasbahn 2 verschieben, wird dieser Spannungsverlauf gestört. Durch Auswertung des augenblicklichen positionsabhängigen Spannungsverlaufs können Glasfehler mit quer zur Bahnrichtung verlaufenden Ablenkungen detektiert werden. Die Änderung ist ein Maß für die Größe der Ablenkung. Eine Störung durch Schmutz beeinflußt beide Spannungen und hebt sich in der Formel auf.

Durch die Auswertung eines zweiten um 90° Grad versetzten Musters werden Totzonen vermieden.

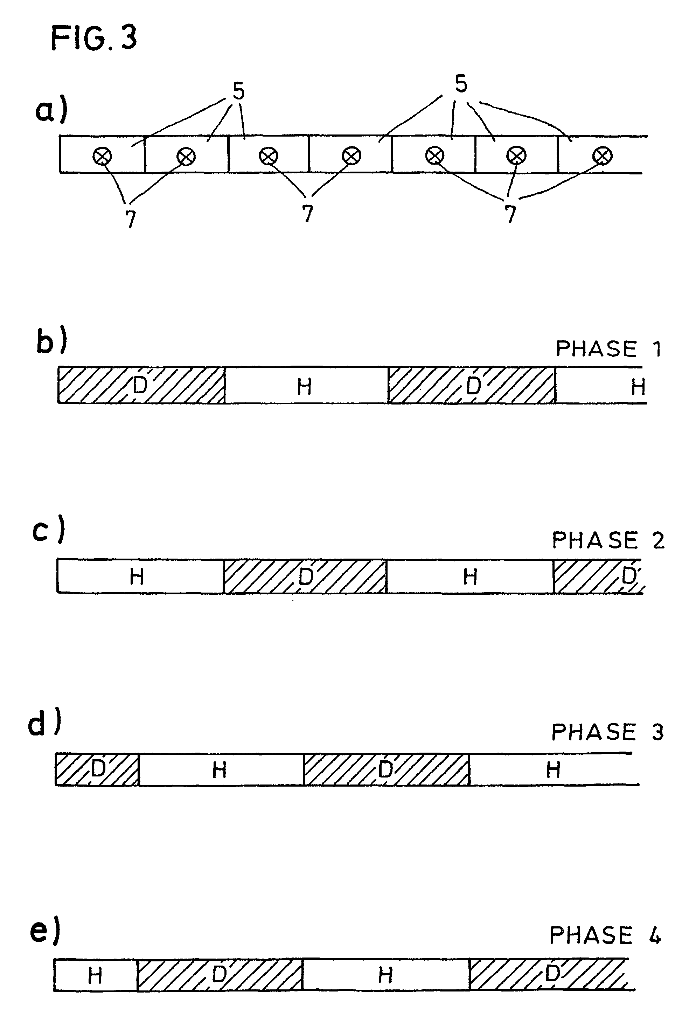

Diese Auswertung kann man auch mit SW-Kameras mit beliebiger Beleuchtungsfarbe durchführen. Hierzu wird die Beleuchtung in kleinere Segmente 5 unterteilt. Die Videosignale $U_1$ und $U_2$ werden dadurch erzeugt, daß die Beleuchtung durch die Lampen 7 von Scan zu Scan umgeschaltet wird. $U_1$ und $U_2$ werden in den Phasen 1 und 2 und um 90° versetzt in den Phasen $U_3$ und $U_4$ erzeugt. Diese Umschaltung erfolgt zyklisch (Fig. 3).

**Patentansprüche**

1. Verfahren zur Bestimmung der optischen Qualität und zur Detektion von Fehlern von Flachglas (2) und anderen transparenten Materialien, insbesondere von Floatglas, bei dem eine Videokamera (1) durch das Glas (2) bzw. Reflexion eine Beleuchtungsvorrichtung (3) betrachtet, wobei der Fokus auf dem Glas (2) bzw. der Bahn liegt, und die Videokamera (1) Signale in Abhängigkeit von der Qualität des Glases (2) erzeugt und diese ausgewertet werden, **dadurch gekennzeichnet,**

   - **dass** zumindest eine Beleuchtungsvorrichtung (3) mit einem Muster (4) von nebeneinanderliegenden, abwechselnd sich zumindest farblich und/oder in der Intensität unterscheidenden Teilabschnitten (5a,5b) verwendet wird,
   - **dass** ein Betrachtungsfleck der Videokamera (1) das Muster (4) aufnimmt,
   - **dass** dem Signal des Musters (4) zwei Videosignale ($U_1$,$U_2$) zugeordnet werden und wobei das eine Videosignal der einen Farbe und/oder Intensität des Musters und das andere Videosignal der anderen Farbe und/oder Intensität des Musters zugeordnet wird, und
   - **dass** eine Veränderung der Intensität der Videosignale ($U_1$,$U_2$) zur Beurteilung der Qualität des Glases (2) bzw. der Bahn herangezogen wird.

2. Verfahren nach Anspruch 1, **dadurch gekennzeichnet, daß** ein zweifarbiges Muster (4) mit sich in der Farbe abwechselnden Teilabschnitten (5a, 5b) verwendet wird und die Videokamera (1) einen Farbchip enthält, wobei die Videosignale $U_1$, $U_2$ jeweils einer Farbe zugeordnet sind.

3. Verfahren nach Anspruch 1 oder 2, **dadurch gekennzeichnet, daß** die Breite der Teilabschnitte (5a, 5b) geringfügig größer oder kleiner als die Seitenlänge des Betrachtungsflecks ist.

4. Verfahren nach Anspruch 1, **dadurch gekennzeichnet, daß** das Muster (4) aus Teilabschnitten (5a, 5b) abwechselnder Hell- und Dunkelzonen besteht.

5. Verfahren nach Anspruch 4, **dadurch gekennzeichnet, daß** die Teilabschnitte (5a, 5b) in vorgegebenen Phasen zyklisch beleuchtet und abgedunkelt werden.

6. Verfahren nach einem der Ansprüche 1 bis 5, **dadurch gekennzeichnet, daß** eine zweite identische Beleuchtungsvorrichtung (3) verwendet wird, deren Muster (4) um die Hälfte der Breite eines Teilabschnittes (5a, 5b) gegenüber dem Muster (4) der ersten Beleuchtungsvorrichtung (3) verschoben ist.

7. Verfahren nach einem der Ansprüche 1 bis 6, **dadurch gekennzeichnet, daß** als Maß für die Ablenkung des Fehlers im Glas (2) die Differenz der beiden Videosignale $U_1$, $U_2$ herangezogen wird.

8. Verfahren nach Anspruch 7, **dadurch gekennzeichnet, daß** als Maß für die Ablenkung des Fehlers die Beziehung

$$Upos = \frac{U_1 - U_2}{U_1 + U_2}$$

verwendet wird.

9. Verfahren nach einem der Ansprüche 1 bis 8, **dadurch gekennzeichnet, daß** zur Vermessung des Fehlerkerns im Glas (2) eine Abweichung vom Maximalwert der Addition $U_1$ und $U_2$, d. h.

$$U_h = U_1 + U_2$$

verwendet wird.

**Claims**

1. A method for determining the optical quality of and for detecting faults in flat glass (2) and other transparent materials, especially in float glass, wherein a video camera (1) is arranged to monitor an illuminating device (3) either through the glass (2) or by observing the reflection thereof, the focus being on the glass (2) and the sheet, respectively, and the video camera (1) generates signals in dependence on the quality of the glass (2) and these signals are evaluated, **characterized in**

- **that** at least one illuminating device (3) comprising a pattern (4) of adjacent partial portions (5a,5b) alternately different at least in color and/or in intensity is used,
- **that** an observation spot of the video camera (1) picks up the pattern (4),
- **that** two video signals ($U_1$,$U_2$) are assigned to the signal of the pattern (4), and wherein one video signal is assigned to one color and/or intensity of the pattern and the other video signal to the other color and/or intensity of the pattern, and
- **that** a change of the intensity of the video signals ($U_1$,$U_2$) is used for evaluating the quality of the glass (2) and the sheet, respectively.

2. The method according to claim 1, **characterized in that** use is made of a two-colored pattern (4) comprising partial portions (5a,5b) of alternating colors, and that the video camera (1) includes a color chip, the video signals $U_1$,$U_2$ being assigned respectively to one color.

3. The method according to claim 1 or 2, **characterized in that** the width of the partial portions (5a,5b) is slightly larger or smaller than the lateral length of the observation spot.

4. The method according to claim 1, **characterized in that** the pattern (4) comprises partial portions (5a, 5b) of alternating bright and dark zones.

5. The method according to claim 4, **characterized in that** the partial portions (5a,5b) are illuminated and obscured cyclically in predetermined phases.

6. The method according to any one of claims 1 to 5, **characterized in that** a second, identical illuminating device (3) is used whose pattern (4) is arranged at a displacement by half of the width of a partial portion (5a,5b) relative to the pattern (4) of the first illuminating device (3).

7. The method according to any one of claims 1 to 6, **characterized in that** the difference between the two video signals $U_1$,$U_2$ is used as a measure of the deflection caused by the fault in the glass (2).

8. The method according to claim 7, **characterized in that** the relation

$$Upos = \frac{U_1 - U_2}{U_1 + U_2}$$

is used as a measure of the deflection caused to the fault.

9. The method according to any one of claims 1 to 8, **characterized in that**, for measuring the core of the fault in the glass (2), use is made of a deviation from the maximum value of the addition of $U_1$ and $U_2$, i. e. from

$$U_h = U_1 + U_2.$$

## Revendications

1. Procédé permettant de déterminer la qualité optique et de détecter les défauts du verre feuilleté (2) et d'autres matériaux optiques transparents, notamment de verre flotté, dans lequel une caméra vidéo (1) observe à travers le verre (2), respectivement par réflexion, un dispositif d'éclairage (3), le foyer se situant sur le verre (2), respectivement sur la bande, et la caméra vidéo (1) générant des signaux en fonction de la qualité du verre (2) et ceux-ci étant analysés,

   **caractérisé en ce que**

   - au moins un dispositif d'éclairage (3) est utilisé avec un dessin (4) de segments partiels (5a, 5b) juxtaposés se différenciant de manière alternative, du moins au niveau de la couleur et/ou de l'intensité,
   - un spot d'observation de la caméra vidéo (1) enregistre le dessin (4),
   - deux signaux vidéo ($U_1$, $U_2$) sont associés au signal du dessin (4), et l'un des signaux vidéo étant associé à une couleur et/ou intensité du dessin et l'autre signal vidéo à l'autre couleur et/ou intensité du dessin, et
   - une variation de l'intensité des signaux vidéo ($U_1$, $U_2$) est prise en compte pour évaluer la qualité du verre (2), respectivement de la bande.

2. Procédé selon la revendication 1, **caractérisé en ce qu'**un dessin bicolore (4) avec des segments partiels (5a, 5b) de couleurs alternantes est utilisé, et **en ce que** la caméra vidéo (1) comprend une pastille de couleur, les signaux vidéo $U_1$, $U_2$ étant à chaque fois associés à une couleur.

3. Procédé selon la revendication 1 ou 2, **caractérisé en ce que** la largeur des segments partiels (5a, 5b) est légèrement supérieure ou inférieure à la longueur latérale du spot d'observation.

4. Procédé selon la revendication 1, **caractérisé en ce que** le dessin (4) est composé de segments partiels (5a, 5b) de zones claires et obscures alternantes.

**5.** Procédé selon la revendication 4, **caractérisé en ce que** les segments partiels (5a, 5b) sont cycliquement éclairés et obscurcis pendant des phases prédéterminées.

**6.** Procédé selon l'une des revendications 1 à 5, **caractérisé en ce que** l'on utilise un deuxième dispositif d'éclairage (3) identique, dont le dessin (4) est décalé de la moitié de la larguer d'un segment partiel (5a, 5b) par rapport au dessin (4) du premier dispositif d'éclairage (3).

**7.** Procédé selon l'une des revendications 1 à 6, **caractérisé en ce que** comme valeur pour la déviation du défaut dans le verre (2) on prend en compte la différence des deux signaux vidéo $U_1$, $U_2$.

**8.** Procédé selon la revendication 7, **caractérisé en ce que** comme valeur pour la déviation du défaut on utilise la relation

$$Upos = \frac{U_1 - U_2}{U_1 + U_2}$$

**9.** Procédé selon l'une des revendications 1 à 8, **caractérisé en ce que** pour mesurer le noyau du défaut dans le verre (2), on utilise un écart de la valeur maximale de l'addition $U_1$ et $U_2$, soit

$$U_h = U_1 + U_2.$$

FIG.1

FIG.2

a)

b)

U1

c)

U2

# FIG. 3

a)

b)                                                          PHASE 1

c)                                                          PHASE 2

d)                                                          PHASE 3

e)                                                          PHASE 4